# EUROPEAN PATENT SPECIFICATION

(11) **EP 3 972 214 B1**
(45) Date of publication and mention of the grant of the patent: **17.07.2024**
(21) Application number: 20196603.3
(22) Date of filing: 17.09.2020
(51) Int. Cl.: G06F 9/50, G06F 9/46, H04L 9/40

(54) **TECHNIQUES TO EXTEND PUBLIC CLOUD COMPUTING SYSTEMS TO A HOME OF A USER**
TECHNIKEN ZUR AUSWEITUNG ÖFFENTLICHER CLOUD-RECHENSYSTEME AUF DAS ZUHAUSE EINES BENUTZERS
TECHNIQUES PERMETTANT D'ÉTENDRE LES SYSTÈMES INFORMATIQUES EN NUAGE PUBLICS AU DOMICILE D'UN UTILISATEUR

(43) Date of publication of application: 23.03.2022
(73) Proprietor: Deutsche Telekom AG, 53113 Bonn (DE)
(72) Inventor: KIM, Ju Hoon, 13158 Berlin (DE)
(74) Representative: Braun-Dullaeus Pannen Emmerling Patent- & Rechtsanwaltspartnerschaft mbB

(56) References cited:
- CN-A- 110 545 397
- CN-A- 111 027 713

## Description

The invention relates to the technical field of cloud computing system, in particular the invention relates to techniques to extend public cloud computing systems to a home environment of a user and/or companies by using a dedicated external cloud computing unit and/or a dedicated arrangement of cloud computing entities.

### Background of the invention:

Due to the increasing size and number of digital content and the possibility to outsource computing power, cloud systems become more and more popular among Internet users. An additional advantage of cloud systems is that they can efficiently be upgraded to enhance their performance. Conventionally, if the user wanted to increase his storage or computing resources he had to upgrade his hardware, e.g. by buying a new computer. In the case of cloud computing systems, the user only needs a communication interface to the cloud computing system to benefit directly from hardware upgrades of the cloud computing system without the need to change his own computer. The computer of the user only needs to transfer data to the cloud computing system while the resources consuming computing tasks are executed on the cloud of the system itself.

Internet users can subscribe to various services of a cloud service provider and use computing and networking resources over the Internet according to an agreement with the cloud service provider. This cloud service is commonly referred to as a public cloud service because basically everyone can use the service after signing a contract with the cloud service provider. Public cloud services offer nearly "unlimited" storage and computing power, and easy deployment of application services for their customers.

Despite the advantages of the public cloud, there still remains some disadvantages. For example, the time it takes for the data to travel from the user to the public cloud system back and forth, the so-called round-trip time, is generally very large, which is still a remaining problem for latency-sensitive services and applications due to the propagation delay caused by the physical distance between a customer and a data center where the cloud service is operated. For example, Augmented Reality (AR) or Virtual Reality (VR) applications with ultra-high quality videos are considered as being latency-sensitive. Pre-downloading such high-volume media content at customer's devices is the most viable solution for improving the user experience.

Another issue is that some services and content are intended to be accessible within the home network because databases of public cloud service providers are often targeted by cyber criminals. Hence, up to now there remains a security risk if the user uses public cloud services to store or to compute security sensitive data. Management applications of loT (Internet of Things)-based home appliance devices are examples of those security sensitive application groups.

Larger companies can benefit from cloud computing principles and maintaining a higher level of security by running their own cloud computing system within their home network. In addition, this reduces the latency issue. However, for small companies or home users such a "private" cloud computing system is often too expensive and requires a high level of system administration skills.

A home server system could be a simpler solution than the private cloud system at customer's home. A home server system offers an easy installation of applications and comprehensive management over a web front-end or a mobile app for the customer, but the scope of services is typically limited to multimedia or traditional network applications specified by the system vendor. The availability of services in a home server system might be low if the customer wants to expose a part of services (e.g., a personal website or blog) to the public. Another problem of the home server system is that it is difficult to extend its resources. An upgrade of the system might not be possible regarding the system design or, if it is possible, the customer needs to replace a hardware component and to reconfigure the system.

From CN 110 545 397 A (RES INST CHINA MOBILE COMMUNICATIONS CORP ET AL.) 6 December 2019 (2019-12-06) a method is known to pre-install registration software to make a smart terminal part of a local system to collaboratively certify surveillance video. However this patent publication fails to describe how to add nodes to a public Cloud provider's system.

According to a first aspect of the invention an external worker node for the use in a home network environment of a user adapted to access a public cluster in the internet is described, the external worker node comprises
a communication interface adapted to communicate with a communication network, in particular via a home gateway router;
a computing unit adapted to perform calculation tasks, in particular calculation tasks of nodes in a computing cluster;
wherein the external worker node comprises
a pre-installed software stack, wherein the pre-installed software stack comprises
a node registration system "NRS" that is adapted to coordinate a registration process of the external worker node with a Cloud Service Management System "CSMS" of a public cluster of a network provider.

This provides the advantage that the user can easily implement features of a public cluster into his secure home network in order to increase his computational resources. The user simply buys the external worker node of the provider of the public cluster, wherein the pre-installed software stack does the necessary registration, authentication steps in order to connect to other parts of the public cluster. The CSMS knows about all the worker nodes of the public cluster, including the external worker nodes, and is therefore able to efficiently distribute the computational tasks between them. Hence, in principle the external worker node is a plugin solution to extend or implement additional computing resources. The user can run safety relevant computational tasks on his external worker node without the risk that data can be stolen by transferring them from the user to the public cloud and back. In addition, latency critical computational tasks can be done because the time sending data packets forth and back is no longer necessary. However, the user still has in principle access to the other worker nodes in the public cloud and can use those computational resources for example for running safety critical computational tasks. This provides an easy way of a scalable computer environment. The term external is to be understood that the external worker node is being external with respect to the other nodes of the public cloud.

In an embodiment, the pre-installed software stack comprises a security unit adapted to store an identification code "ID-code" of the external worker node.

This provides the advantage that only verified and trusted external worker nodes can be put into operation by the user. To serve that purpose every ID-code is unique and pre-stored in a database of the CSMS 310.

In an embodiment, the pre-installed software stack comprises a web-user-interface adapted to enable the communication of the user with the CSMS.

This provides the user with a convenient way to enter his credentials or other necessary information to put the external worker node into operation. Especially, this can provide a convenient way of error management of the worker node if the user can send diagnostic information about the external worker node through the web-user-interface to the service provider of the public cloud.

In an embodiment, the pre-installed software stack comprises cloud run time.

The cloud run-time enables the external worker node to act as a node of the public cloud. In other words, the cloud run-time is an enabler of virtualized computing and networking environments.

In an embodiment, the external worker node is adapted to share computational tasks with worker nodes of the public cluster.

This provides the advantage, that the user can access our benefit from the computational resources of the other nodes in the public cloud. In addition, the public cloud has access to the external worker node in order to increase its own computational resources. Therefore, in principle all the worker nodes of the public cloud could be represented by external worker nodes at multiple users managed by a single CSMS of the network provider.

In an embodiment, the external worker node is adapted to prefer computational requests of the user over all other computational requests from the public cluster.

This provides the advantage that the user can share the computational resources of his home-based external working node with the public cluster and at the same time ensuring that his computational resources are only used if he does not need them.

In an embodiment, the external worker node is adapted to establish a secure tunneled link with the public cluster.

This provides the advantage of a secure data transfer between the external worker node and the public cluster. Implementation details of the tunnel can be stored in a security unit of the software stack by the service provider of the public cluster.

According to a second aspect of the invention, a hybrid cloud system is provided, wherein the hybrid cloud system comprises
- a public cluster of a service provider configured to perform computational tasks of users, wherein the public cluster comprises
   o worker nodes adapted to perform the computational tasks,
   o a cloud service management system adapted to manage the worker nodes and to add new worker nodes and/or external worker node to the public cluster;
- a communication network adapted to establish communication links between the worker nodes and/or between the worker nodes and the CSMS;
- an external worker node as described above, wherein the external worker node exchanges data with the public cluster via the communication network.

This provides the advantage of a very flexible and scalable hybrid cloud system that can integrate home-based external worker nodes as well as ordinary public nodes within one computational cluster managed by the CSMS. It combines the advantages of enhanced computational power for users with a safe computational environment that efficiently shields from cyber-attacks.

In an embodiment, the external worker node is connected to the communication network via a home gateway router.

This provides the advantage, that the external worker node can efficiently use existing resources within the home network of the user and that the firewall of the home gateway router serves as an additional security measure against cyber-attacks.

In an embodiment, the hybrid cloud system comprises of multiple external worker nodes.

This provides the advantage, that multiple users can benefit from the hybrid cloud system and that the hybrid cloud system can easily be extended with respect to computational power.

In an embodiment, more than one or all multiple external worker nodes are associated to a single user.

This is especially beneficial for companies that have a high computational power demand. They can in principle connect any number of external worker nodes to the public cluster and therefore perfectly match the actual computational demand.

In an embodiment, the communication between the nodes, the CSMS and/or a cloud service portal are realized as application programming interfaces, which provides a convenient way to realize communication in a modular system.

In an embodiment, a cloud abstraction layer of the CSMS translates requests of the user into various public cloud APIs. This provides the advantage, that the user does not need to know about the APIs, but that the cloud abstraction layer casts about the "translation" of the requests of the user.

According to a third aspect of the invention, a method for setting up a hybrid cloud system as described above is provided, wherein the method comprises the following steps:
- Connecting an external worker node as described above to a communication network, wherein a public cluster is associated to the communication network;
- Starting a registration and authentication process of the external worker node at the CSMS;
- After successful registration of the external worker node adding the external worker node to the public cluster.

In the following, preferred examples of the present invention are explained with reference to the accompanying figures
- Fig. 1:: illustrates the overall architecture of the hybrid cloud system comprising a user's external cloud computing unit and public cloud nodes.
- Fig. 2:: shows functional components of the cloud service management system of Fig. 1.
- Fig. 3a:: shows hardware components of the external cloud computing unit.
- Fig. 3b:: shows a software stack of the cloud computing unit of Fig. 3a.
- Fig. 4:: illustrates the set up process of the hybrid cloud system for a user.
- Fig. 5:: shows the installation and bootstrapping method of the external cloud computing unit within the home network of the user.
- Fig. 6:: shows the extension of a private cloud system of the user to a public cloud system of a service provider.
- Fig. 7: illustrates retrieving an application image from a repository of the service provider and its implementation on the external cloud computing unit.
- Fig. 8:: shows a flow diagram, which illustrates the implementation of a new external cloud computing unit to the public cloud system of the service providers.
- Fig. 9:: shows flow diagram, which illustrates the implementation of the new external cloud computing unit by the user to the public cloud system.
- Fig. 10: shows a flow diagram that illustrates the extension of resources of the cluster and features to the public cloud system of the service provider.
- Fig. 11: shows a flow diagram that illustrates the implementation of an application to the cluster by the user.

In the following, numerous features of the present invention are explained in detail on the basis of preferred embodiments. The present disclosure is not limited to the specifically named combinations of features. Rather the characteristics specified here can be combined arbitrarily to invention-conformal embodiments, if this is not expressly excluded in the following.

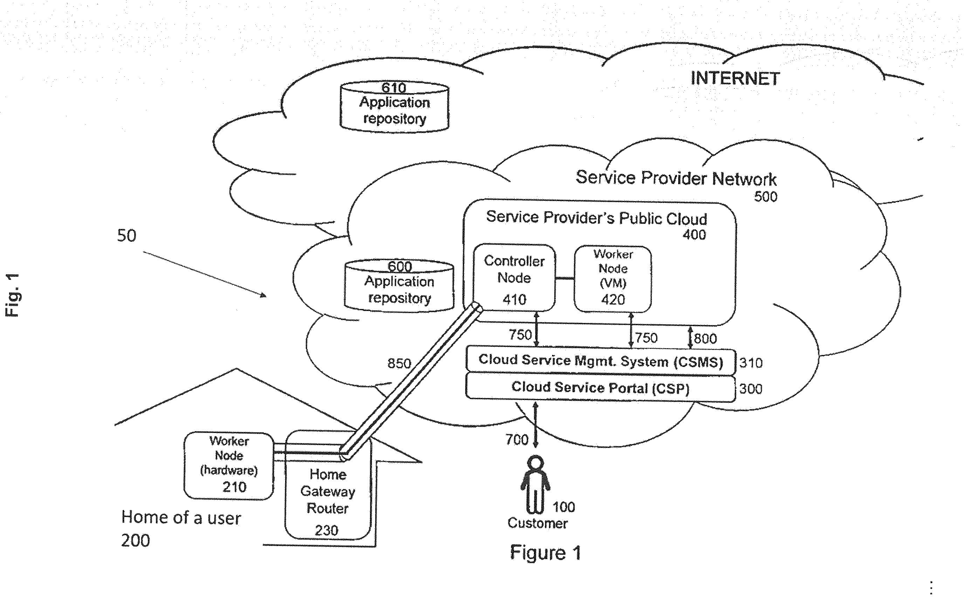

Fig. 1 illustrates the overall architecture of an inventive hybrid cloud system 50 comprising a user's external cloud computing unit 210, which is also called a user worker node 210 or an external cloud computing node 210, and public cloud nodes 410, 420, which are associated to the public cloud 400 of a service provider. The external cloud computing unit 210 establish a communication link with a home gateway router 230 get access to the Internet. The home gateway router 230 builds up a communication link 850, in particular a tunneled communication link 850, with the public cloud 400 within the service provider network 500. Application programming interfaces "API" 750, 800, 900 are established between a cloud service management system "CSMS" 310 and the public cloud 400. Outside of his home, the user has also the possibility to connect to the public cloud 400 by looking in to the cloud service portal "CSP" 300.

The architecture of the network 500, dedicated workflows and APIs (application programming interface) of Hybrid Cloud Service (HCS) allow a user 100 to build his/her own cloud cluster comprised of one or multiple low-cost external cloud computing units 210 in user's home 200 and virtualized public nodes 410,420 within the public cloud 400 of the service provider.

The provider of the HCS may operate its own public cloud 400, but he can also create the private cloud 400 or a public cluster by using 3rd-party public cloud systems such as AWS (Amazon Web Service) or GCP (Google Cloud Platform). A cluster is a group of physical or logical computers that works as a single computer with aggregated computing resources.

The HCS architecture supports low latency and high security by placing services and applications in the external cloud computing units 210 that is implemented in the home 200 of the user 100 where the access is under the control of the user 100, especially if the user 100 uses a fixed line for his user equipment to communicate with the external cloud computing unit 210. The system also supports scalability, cost-efficiency and flexibility with the capability of adding additional external cloud computing units 210 dynamically in the home 200 of the user 100 or to add additional working nodes to the public cloud 400.

In technical terms, a node represents a physical or logical computer in which a group of computing resources is available for hosting computer software or network services. This invention describes a physical computer as a single hardware node 210, but the physical computer may contain multiple virtual nodes if the computer, in particular a server, supports a virtualization technology and is implemented with the corresponding virtualization software.

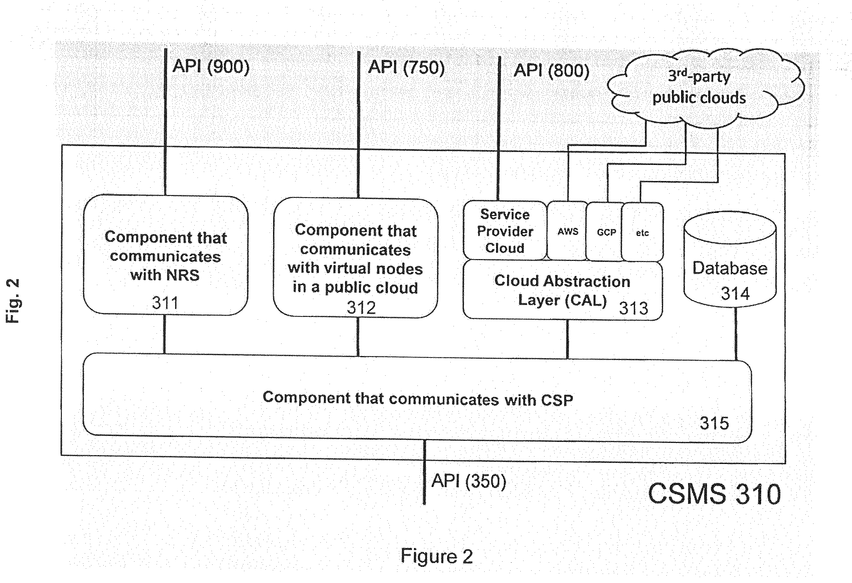

Fig. 2 shows the CSMS 310 of Fig. 1 in greater detail. A first API 750 provides an interface of the CSMS 310 to a first component 312 of the CSMS 310 that communicates with virtual nodes in the public cloud 400. A second API 800 provides an interface to the service provider cloud component and to a cloud abstraction layer "CAL" 313, which enables access to the party public clouds like AWS, GCP, and the like. A third API 900 provides an interface to a third component 311 that communicates with the node registration system "NRS" 224. All those components are connected to a fourth component 315 that communicates with the CSP 300. The fourth component 315 is connected to a database 314 of the CSMS 310. By means of this architecture, the service provider can efficiently run his public cloud 400.

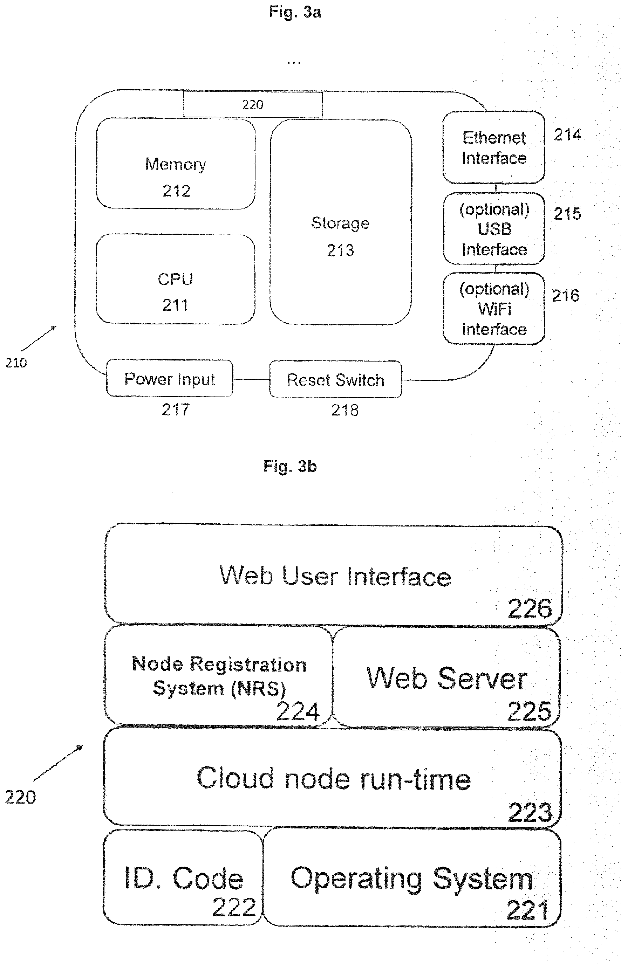

Fig. 3a illustrates hardware components of the external cloud computing unit 210. The external cloud computing unit 210 features a CPU 211, memory 212, a disk storage 213 components with enough cycles and capacities for embedding a pre-installed software stack 220 and for installing additional applications. The external cloud computing unit 210 also shows an Ethernet port 214 for connecting to a home gateway router or switch. In addition, the external cloud computing unit 210 may have a WiFi interface 216 and/or a USB interfaces 215 for supporting wireless connectivity and storage extension. The Ethernet interface 214 is an essential part of the device since the user 100 must access a web front-end 226 of the Node Registration System (NRS) 224 of the public cloud 400 by means of the web front-end for the node registration. The NRS 224 serves the purpose that only authorized external cloud computing units 210 can connect/register to the public cloud 400. After the registration an initial configuration process of the external cloud computing unit 210 is performed. After the successful initial configuration process, the network communication may be changed from the Ethernet interface 214 to the WiFi interface 216 if the external cloud computing unit 210 is equipped with the WiFi interface 216.

Some methods allow the external cloud computing unit 210 to establish a connectivity to the home network over the WiFi interface 216 without a special human interaction such as keyboard and mouse utilization. In that case, the registration of the external cloud computing unit 210 may be performed by means of the WiFi interface 216 instead of the Ethernet interface 214, but the invention describes the process of setting-up the external cloud computing unit 210 based on the Ethernet interface 214.

The external cloud computing unit 210 has a hardware push button 218 to operate re-configuration actions such as stop, restart or factory reset. The button 218 can trigger different actions based on the status of the device and the duration of the button push. For example, the external cloud computing unit 210 will turn on when the button 218 is pressed one time shortly if the machine is turned off, while the same action will restart the machine when the button 218 is pressed during its operation. A long press on the button 218, e.g. longer than five seconds, will initiate a safe stop of the external cloud computing unit 210. The external cloud computing unit 210 will initiate a factory reset process if the button is pressed, for example, longer than 10 seconds. In order to avoid the accidental erase of present configurations of the device, one can implement complex push pattern for the factory reset such as long-press and short-press combinations. Another option to avoid an accidental factory reset could be making it hard to press the button 218 without a special tool such as a pinhole. The external cloud computing unit 210 may have two or more buttons for triggering different actions. The device can obtain supply of electric power by a USB port 217 or by an AC adapter 217 depending on the power consumption of the external cloud computing unit 210.

Fig. 3b illustrates the software stack 220 that is required to be pre-installed within the external cloud computing unit 210. The pre-installed software stack 220 of the external cloud computing unit 210 comprises an operating system 221, an ID-Code 222 and a cloud node run-time 223. A run-time is a set of software that enables a computer system to create an environment for conducting specific functions. Therefore, in present case, the cloud run-time 223 enables the external cloud computing unit 210 to work as a cloud node. In other words, the run-time 223 is an enabler of virtualized computing and networking environments. In a virtualized computing environment, a single physical machine can host multiple logical machines (i.e., virtual machines) or multiple independent applications and services (e.g., containers and pods) concurrently. On top of the run-time 223, a set of scripts or binary executables and a graphical web user interface 226 over a web server 225 are prepared for the configuration of the external cloud computing unit 210. When the user initiates the external cloud computing node 210 configuration/registration process through the graphical web user interface of the external cloud computing unit 210, the NRS 224 coordinates the node configuration process with the Cloud Service Management System (CSMS) 310 in the service provider's network 500. The NRS 224, the Web Server and the Web User Interface may be modularized in virtualized machines or containers.

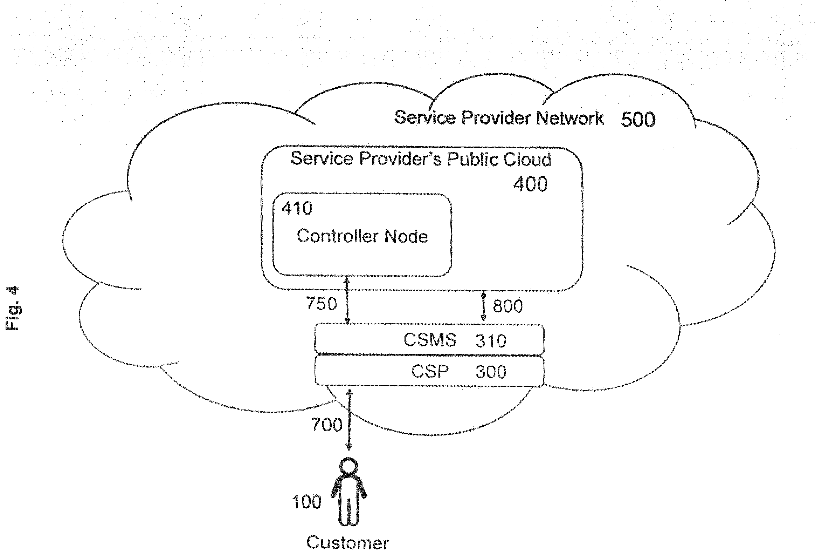

Fig. 4 illustrates the set up process of the hybrid cloud system for the user 100. The user can establish a first set-up link 700 with the CSP 300 to start the set up process. For example, he can provide information to the CSP 300 concerning his future hybrid cloud system "HCS" 50, like the location available bandwidth, etc.

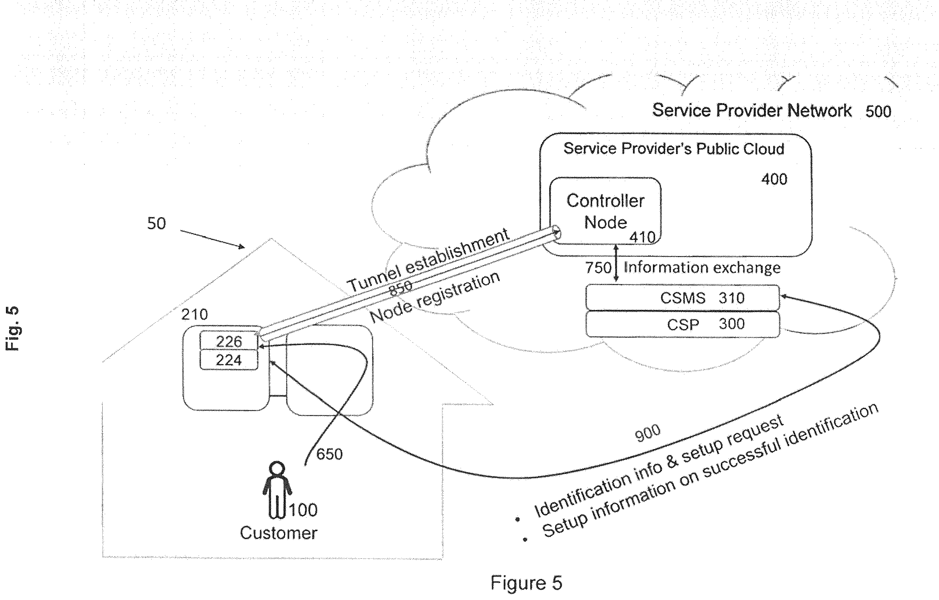

Fig. 5 shows the installation and bootstrapping method of the external cloud computing unit 210 within the home network of the user. In a first installation step 650, the user can connect the worker node 210 to his home gateway router 230. By means of the web front-end 226, he can start the setup process. By means of the third API 900, the worker node 210 can transfer identification information and set-up request to the CSMS 310, in particular, a communication link to the API 900 can be the tunneled link 850 that uses the home gateway 230 to communicate with the Internet. In return, the worker node 210 receives set up information from the CSMS 310 over the communication link after successful identification. After successful identification and registration, the CSMS 310 adds the worker node 210 as an external worker node 210 to the cloud 400, which upgrades the public cloud 400. The public cloud 400 now comprises "public" working nodes 420 and external worker node 210. The CSMS 310 stores this information and distributes different tasks depending on if the node is a "public" working node 420 or a user associated external worker node 210.

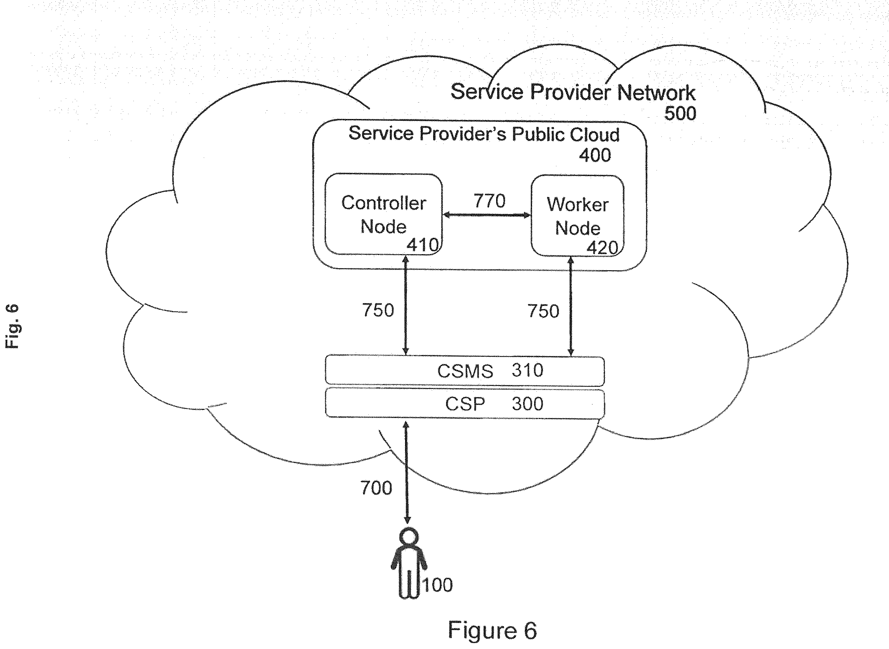

Fig. 6 shows the extension of the private cloud system of the user 100 to the public cloud system 400 of a service provider. Via the first set-up link 700, the user 100 can specify a set of policy rules that allows the public cloud system 400 to outsource computational tasks of the public cloud 400 to the external worker node 210 if certain criteria are fulfilled. This leads efficiently to an extension the public cloud system 400. The controller node 410 can distribute computational tasks of the public worker nodes 420 the external worker node 210. A possible scenario can be that the user 100 is currently not using his external worker node 210. If the policy rules specify that computational tasks of the user 100 always have a higher priority than all the other computational tasks, this provides an efficient way of upgrading the public cloud system 400 while at the same time ensuring the full computational power of the external working node 210 to the user 100.

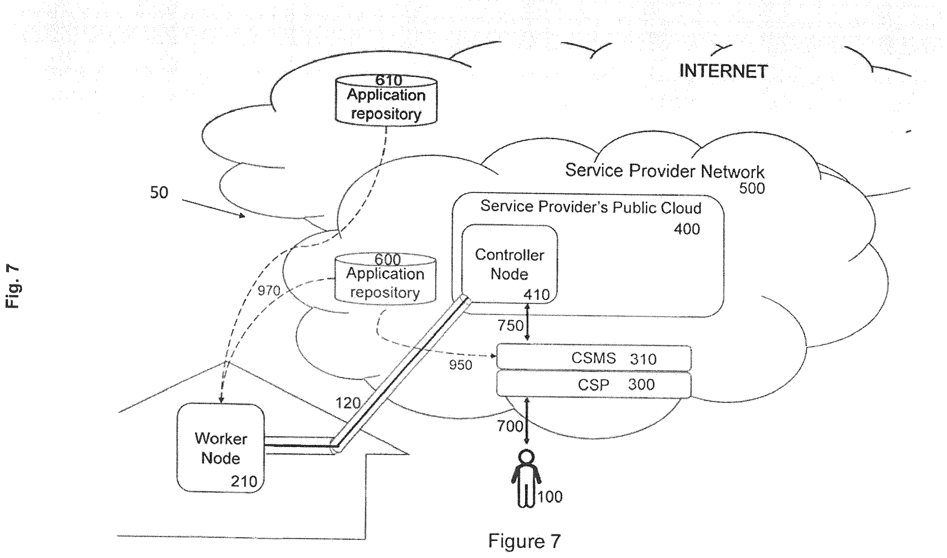

Fig. 7 illustrates retrieving an application image from a repository of the service provider and its implementation on the external worker node 210. This offers the advantage that the user 100 can benefit from already existing applications and that he can run those applications in a safe environment on his external worker node 210. A first application repository 600 can be associated to the service provider network 500 and a second application repository 610 can be associated to the Internet, which basically means the 3^{rd}-party application repository. The applications can be downloaded to the worker node 210 by means of an application download link 970.

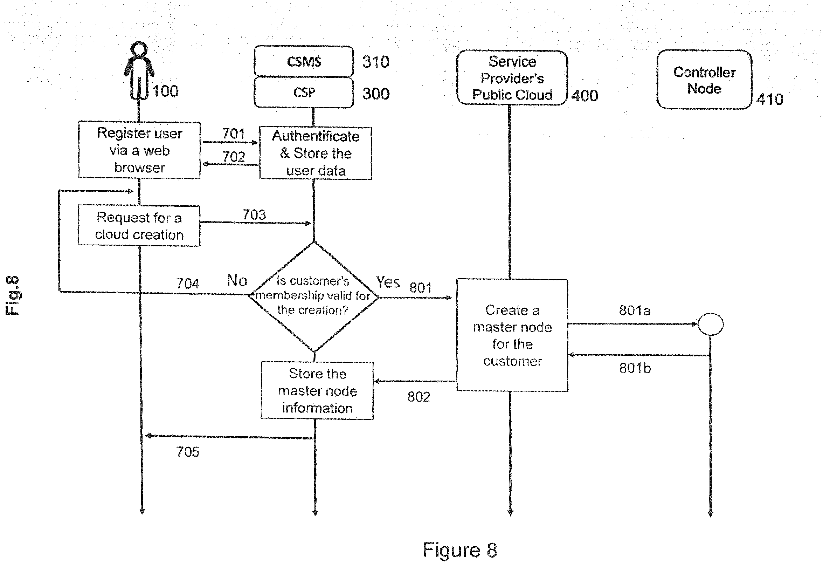

Fig. 8 shows a flow diagram, which illustrates the implementation of the new external cloud computing unit 210 - which is also called the external worker node 210 - to the public cloud system of the service providers.

Hence, Fig. 8 illustrates the process of the cluster creation. The user 100 creates his private cluster by registering to the HCS 50 at the Cloud Service Portal (CSP) 300 by starting a registration process 701. In the registration process 701 the user 100 is authenticated and his user data is being stored. In step 702, the registration process 701 can send an answer to the user 100 concerning his registration request, this includes sending data relating to the registration to the user 100.

The CSP 300 is a web-based service front-end and provides human-friendly management interfaces in graphical form. After a successful registration, the user 100 can create his private cluster through the CSP 300. The system can perform a check if the customer's membership is valid for the creation of the cluster in step 704. After a successful node creation 801 the process continues. On the creation request 703 of the user 100, the Cloud Service Management System (CSMS) 310 creates a customer-dedicated controller node 410 in service the public cloud 400 of the service provider or within a 3rd-party public cloud and creates a unique cluster-id that is dedicated to a cluster . The cluster-id can be a hashed text, human-friendly text name, or number for identifying a cluster across service provider's public cloud 400 and CSMS 310. More precisely, the cluster-id must be the unique identifier of clusters within the HCS 50.

The CSMS 310 is a back-end management system and consists of various software components. For example, the CSMS 310 has a set of scripts or executables that communicate with the public cloud 400 of the service provider, with 3rd-party public cloud services, with the user's dedicated nodes in public cloud systems 312, and with the NRS of a hardware node at user's premise 311. Cloud Abstraction Layer (CAL) 313 in CSMS 310 handles the communication with different public cloud systems. CAL 313 interprets HCS APIs to Cloud-specific APIs for different public cloud systems such as AWS and GCP.

Another important component of CSMS 310 is a database 314 that keeps the state of the user's cluster and information required for the user authentication. CSP 300 and CSMS 310 may be implemented in the same computer system/server or they can be implemented in different computer systems.

In the former case, CSP 300 can directly deliver the user's requests to the CSMS 310 through the dedicated APIs 350 and the internal communication methods such as a message bus or IPC (Inter-Process communication).

For the latter case, CSP 300 and CSMS 310 communicate with each other through the dedicated APIs 350 and remote message transfer methods such as REST or RPC.

The architecture of the HCS 50 assumes that service provider's public cloud 400 has its own cloud management system. The public cloud 400 communicates with the CSMS 310 with dedicated APIs. The user 100 manages the cluster through the CSP 300 by using a web browser on a computer or a mobile application created by the service provider. The customer must be authenticated with the credentials through CSP 300 in order to manage his cluster. The CSP 300 converts user's request into appropriate API calls and deliver them to the CSMS 310. The CSMS 310 communicates with the controller node 410 of user's cluster through dedicated APIs 750.

One can implement the APls in any variety of formats, methods and languages such as XML, JSON, REST, RPC, C++, C#, Java, Java Script, Ruby, Python, and so on. Table 1 shows a set of example APIs 350 used for communication between CSMS 310 and CSP 300.

**Table 1 A subset of APIs between CSMS and CSP**

| **API Calls** | **Description** |
|---|---|
| cluster_id createCluster(user_id) | Creates a cluster for the customer with the given user id. This API call returns a HCS-wide unique cluster_id on successful cluster creation. |
| authenticateUser(user_id, user_password) | Verifies the user with given user id and user_password. The call authenticates the user if the verification is successful |
| getClusterStatus(user_id) | Retrieves the status and information of the cluster that belongs to the user_id |
| getNodes(user_id) | Retrieves the status and information of the nodes that belong to the user id |
| getNode(user_id, node_id) | Retrieves the status and information of the node that is associated to the given node id |
| getInstalledServices(user_id) | Retrieves a list of installed applications and services within the cluster that belongs to the user_id |
| getStatusOfService(user_id, node_id, svc_id) | Retrieves the status and information of an application or a service that is installed in a specific node of the cluster that belongs to the user id |
| getListOfAvailableServices(user_id) | Retrieves a list of applications that can be deployed within the cluster that belongs to the user_id |
| deployService(user_id, node_id, app_id) | Installs the application that has an app_id to a specific node of the cluster that belongs to the user_id |
| removeService(user_id, node_id, svc_id) | Removes the application that has an svc_id from the specific node of the cluster that belongs to the user id |
| moveService(user_id, node id_1, node_id_2, svc_id) | Moves an installed application or service from one node (node_id_1) to another node (node_id_2) |
| createNewNode(user_id) | Creates a new node in the public cloud and adds it to the cluster of the user |
| unlockDevice(user_id, node_id) | Change the status of a hardware device at user's home from a locked status to an unlocked status so that the hardware can be reinitialized by the user |

Table 2 shows a set of example APIs between CSMS 310 and nodes in the public cloud 400

**Table 2 A subset of example APIs between CSMS 310 and nodes 410, 420 in the public cloud 400**

| **API Calls** | **Description** |
|---|---|
| initiate Tunnel (node_info) | Orders the controller node 410 to initiate a tunnel towards a working node with the given note information |
| getToken(cluster_id) | Retrieves a token required to join the cluster that is associated with a given cluster_id |
| deployService(node_id, app_url) | Orders the controller node to install an application to the specified node that has the given node id |
| removeService(node_id, svc_id) | Orders the controller node to remove the installed application or service from the node |
| moveService(node_id_1, node_id_2,svc_id) | Orders the controller node to move the installed application or service from one node (node_id_1) to another node (node_id_2) |
| getNodelnfo(node_id) | Retrieves the status and information of the node that is associated to the given node id |

Table 3 shows a set of example APIs 800 used for communication between the CSMS 310 and the management system of the public cloud 400.

**Table 3 A subset of APIs between CSMS 310 and the public cloud 400 management system**

| **API Calls** | **Description** |
|---|---|
| node_id | Creates a virtual node within the cluster that is associated with the given cluster_id. The virtual node will load an image that is pre-installed on the software stack required to be a controller node. |
| createControllerNode(cluster_id) | |
| | This call returns a unique node id on successful node creation. |
| node_id | Creates a virtual node within the cluster that is associated with the given cluster id. The virtual node will pull an image that is pre-installed with the software stack required to be a worker node 220. This call returns a unique node_id on successful node creation. |
| createWorkerNode(cluster_id) | |
| changeResourceNode(node_id, predefined_size) | Increase or decrease the resources of the node to predefined size |
| delete Node(node_id) | Delete a node that is associated with the given node id |
| getNode(node_id) | Retrieves the status and information of the node that is associated to the given node id |

Table 4 shows a set of example APISs 900 used for the communication between the CSMS 310 and the BRS of the external node 210 in the home 200 of the user 100.

**Table 4 APIs 900 between CSMS 310 and NRS 224**

| **API Calls** | **Description,** |
|---|---|
| registerNode(code, user_id, user_password) | NRS sends the unique hardware identification code of the external node 210 and credentials of the user to the CSMS for the authentication of the hardware and the user |
| initiateTunnel(controller_node_info) | CSMS orders NRS to initiate a tunnel towards the controller node |
| joinCluster(controller_node_info, token) | CSMS orders NRS to join the cluster by using the controller note information and token issued by the controller node |
| unregisterNode(code, user id, user_passws) | NRS sends the unique hardware identification code and the credentials of the user to the CSMS for removing the hardware node from the cluster safely |
| notifyTunnelBreak(user_id, node_id) | NRS sends a notification to the CSMS about the status of the broken tunnel |

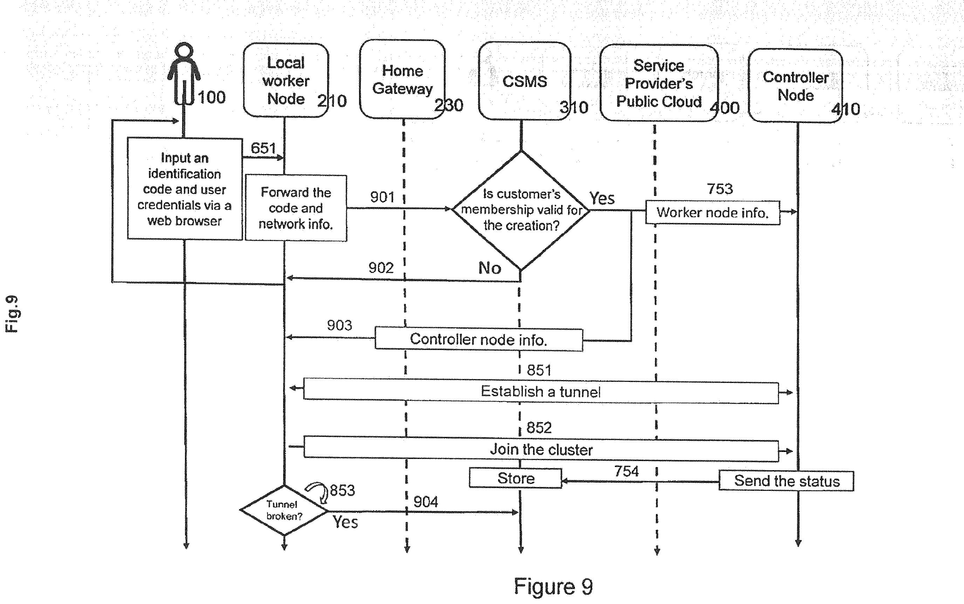

Figure 9 illustrates the process of the registration of the external worker node 210 at the home 200 of the user 100. To extend the public cluster 400 to the home 200 of the user 100, the user 100 purchases the external worker node 210 from the service provider in which the required software stack 220 is pre-installed. The software stack 220 includes a pre-installed service stack that includes NRS and web user interface 226 on a web server 225. These functions provide the user 100 with an easy installation of the external worker node 210. For supporting the easy installation and the external worker node 210 registration, each purchased external worker node 210 has a unique identification code 222. The identification code 222 can be implemented by the service provider or be associated with the serial code of the external worker node 210 implemented by the hardware manufacturer. In any case, the identification code must be unique within service provider's cloud system 400.

For the registration of the external worker node 210, the user 100 connects the external worker node 210 to the home gateway router 230 with an Ethernet cable. The user 100 can access the web user interface of the external worker node 210 through a web browser of a computer connected to the same network. To do this, the user 100 can use the provider-given hostname instead of an IP address. The user 100 provides user credential (i.e., id and password) and the identification code of the external worker node 210 at step 651. The NRS 224 communicates with the CSMS 310 at step 901 and the CSMS 310 verifies the integrity of the user 100 and the external worker node 210 by comparing the provided credentials and identification code with stored information within the database 314 of the CSMS 310. If the integrity check succeeds steps 903 and 753 are executed, the CSMS 310 registers the external worker node 210 to the cluster of the user 100 and locks the identification code of external worker node 210 in the database 314.

For reconfiguring the external worker node 210, the user 100 must unlock the identification code 222 through a management page in the CSP 300. If the verification process fails at step 902, the CSMS 310 sends a failure message back to the NRS of the device and the user 100 is notified about the registration failure by means of the web browser. This configuration process can be implemented with existing protocols and mechanisms such as TR-069 and Netconf/Yang.

Once the external worker node 210 is registered as a worker node of the cluster 400, the CSMS 310 sends the access and/or link establishing information to the external worker node 210 and the controller node 410 for establishing a tunnel 850 between those two devices in step 851. Different Tunneling methods are known to the person skilled in the art. The CSMS 310 also provides the external worker node 210 with a token of the controller node 410 that is required to join the cluster 400. Once the tunnel 850 is established, the external worker node 210 joins the cluster 400 in step 852 by using the token received by the CSMS 310. After the joining process is complete, the controller node 410 sends the status information to the CSMS 310 in step 754 and the CSMS 310 stores the information into the database 314.

It is common that home network gateway of the user 100 does not have a static IP address and the Internet Service Provider (ISP) changes the public IP address of the home gateway router 230 periodically. The established tunnel between the external worker node 210 and the controller node 410 in the public cloud 400 will break when the public IP address of the home gateway router 230 changes. The NRS 224 checks the status of the tunnel 850 periodically at step 853 and notifies CSMS 310 when the tunnel 850 is broken at step 904. Then, the CSMS 310 triggers the tunnel 850 reestablishment and cluster recovery.

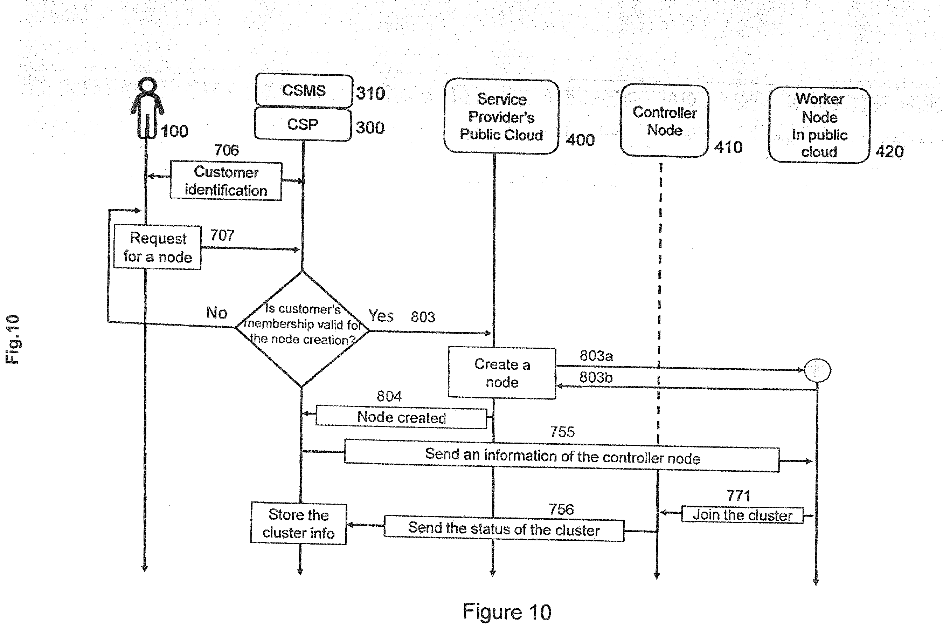

Fig. 10 illustrates the process of a cluster extension to the public cloud 400. The user 100 can extend the capacity of the cluster by purchasing a virtual machine 420 in the public cloud 400 of the service provider. In that case, the required software stack 220 is pre-installed in the virtual machine 420. Extending the capacity in the public cloud 400 is simpler than that in home 200 of the user 100 since it does not require any physical equipment. Indeed, the cloud service described in this invention can also operate without the external worker node 210 at the home 200 of the user 100. In that case, the use case scenario will be the same as known from conventional public cloud services.

For extending the capacity of the cluster of the public cloud 400 of the service provider, the user 100 needs to access the CSP 300 through a web browser or the mobile application provided by the service provider. The user 100 requires a successful authentication in step 706 to access the management page of the public cluster 400. Once the user 100 has access to the management page, the user 100 can request a new worker node 420 in the public cloud 400 of the service provider cloud in step 707. The user 100 can choose a worker node 420 from different resource variances. Then, the CSMS 310 verifies the order of the user 100. For example, the CSMS 310 checks if the membership of the user 100 or credit is valid to purchase the requested (virtual) worker node 420. If the verification is successful, the CSMS 310 communicates with the management system of the public cloud 400 in step 803 and requests the creation of a new worker node 420 in step 803a. When the creation is successful, the public cloud 400 sends the information about the new worker node 420 in step 804 to the CSMS 310. The CSMS 310 communicates with NRS 224 of the new worker node 420 by using this information and provides the information of the controller node in step 755. The new worker node 420 joins the cluster 400 with the provided information in step 771. Finally, the controller node 410 notifies the CSMS 310 about the successful node extension in step 756 and the CSMS 310 stores all the information in the database 314.

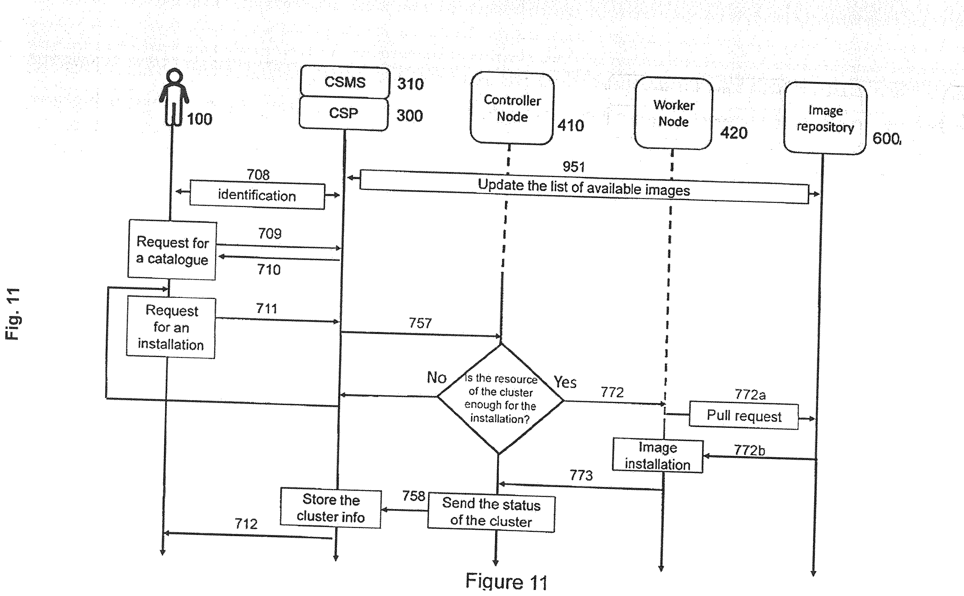

Figure 11 illustrates the process of the application installation in a worker node 210, 420. The CSMS 310 updates a list of services (i.e., a set of applications) and applications that can be installed in the cluster of the user 100 in step 951. The list of services and applications is shown as a web catalogue through the CSP 300 and the user 100 needs to be authenticated to see the list according to the steps 708-710. Each service or application on the list includes a detailed information such as capabilities, requirements (e.g., resources), target worker node (e.g., in-house node or public node), origin repository (e.g., service provider's repository or 3rd-party repository) and configuration detail. The user 100 requests for the installation of a service or an application by clicking a button on the catalogue in the CSP 300 in step 711. Then, the controller orders an appropriate worker node 420 to load and install the image from the repository, and to configure the service or application according to the predefined deployment policy in step 772. Once the application or the service is installed, the worker node 420 notifies the controller node 410 about the current resource status of the node in step 773 and the controller node collates the information from worker nodes 420 in the cluster 400 and notifies it to the CSMS 310 in step 758. The user 100 can check the status of the cluster 400 through the CSP 300 in step 712.

## Claims

1. External worker node for the use in a home network environment of a user adapted to access a public cluster in the internet, the external worker node (210) comprises
a communication interface (214, 215, 216) adapted to communicate with a communication network (500) via a home gateway router (230);
a computing unit (211, 212, 213) adapted to perform calculation tasks,
a pre-installed software stack, wherein the pre-installed software stack comprises
a node registration system "NRS" (224) that is adapted to coordinate a registration process of the external worker node (210) with a Cloud Service Management System "CSMS" (310) of a public cluster (400) of a network provider.

2. The external worker node of claim 1, wherein the pre-installed software stack comprises a security unit adapted to store an identification code "ID-code" (222) of the external worker node (210).

3. The external worker node of any of claims, wherein the pre-installed software stack comprises a web-user-interface adapted to enable the communication of the user (100) with the CSMS (310).

4. The external worker node of any of claims, wherein the pre-installed software stack comprises cloud run-time (223).

5. The external worker node of any of claims, wherein the external worker node (210) is adapted to share computational tasks with worker nodes (420) of the public cluster (400).

6. The external worker node of any of claims, wherein the external worker node (210) is adapted to prefer computational requests of the user (100) over all other computational requests from the public cluster.

7. The external worker node of any of claims, wherein the external worker node is adapted to establish a secure tunneled link (850) with the public cluster (400).

8. A hybrid cloud system comprising
• a public cluster of a service provider configured to perform computational tasks of users, wherein the public cluster comprises
o worker nodes (420) adapted to perform the computational tasks,
o a cloud service management system (310) adapted to manage the worker nodes and to add new worker nodes and/or external worker node to the public cluster (400);
• a communication network (500) adapted to establish communication links between the worker nodes (420) and/or between the worker nodes (420) and the CSMS (310);
• an external worker node (210) according to any of the claims 1-7, wherein the external worker node exchanges data with the public cluster (400) via the communication network (500).

9. The hybrid cloud system of claim 8, wherein the external worker node is connected to the communication network (500) via a home gateway router (230).

10. The hybrid cloud system of one of the claims 8 - 9, wherein hybrid cloud system comprises multiple external worker nodes (210).

11. The hybrid cloud system of one of the claim 10, wherein all multiple external worker nodes (210) are associated to a single user (100).

12. The hybrid cloud system of one of the claims 8 - 11, wherein the communication between the nodes (210, 420), the CSMS (310) and/or a cloud service portal (300) are realized as application programming interfaces.

13. The hybrid cloud system of one of the claims 8 - 12, wherein a cloud abstraction layer of the CSMS (310) translates requests of the user (100) into various public cloud APIs.

14. A Method for setting up a hybrid cloud system according to any of the claims 8-13 comprising the following steps:
• Connecting an external worker node (210) according to any of the claims 1- 7 to a communication network (500), wherein a public cluster is associated to the communication network;
• Starting a registration and authentication process of the external worker node (210) at the CSMS (310);
• After successful registration of the external worker node (210) adding the external worker node (210) to the public cluster (400).

## Patentansprüche

1. Externer Arbeiterknoten zur Verwendung in einer Heimnetzwerkumgebung eines Benutzers, dazu eingerichtet auf einen öffentlichen Cluster im Internet zuzugreifen, wobei der externe Arbeiterknoten (210) aufweist:
eine Kommunikationsschnittstelle (214, 215, 216), die dazu eingerichtet ist, über einen Heim-Gateway-Router (230) mit einem Kommunikationsnetzwerk (500) zu kommunizieren;
eine Datenverarbeitungseinheit (211, 212, 213), die dazu eingerichtet ist, Rechenaufgaben durchzuführen,
einen vorinstallierten Softwarestapel, wobei der vorinstallierte Softwarestapel aufweist:
ein Knotenregistrierungssystem "NRS" (224), das dazu eingerichtet ist, einen Registrierungsvorgang des externen Arbeiterknotens (210) bei einem Cloud Service Management System "CSMS" (310) eines öffentlichen Clusters (400) eines Netzwerkanbieters zu koordinieren.

2. Externer Arbeiterknoten nach Anspruch 1, wobei der vorinstallierte Softwarestapel eine Sicherheitseinheit aufweist, die dazu eingerichtet ist, einen Identifikationscode "ID-Code" (222) des externen Arbeiterknotens (210) zu speichern.

3. Externer Arbeiterknoten nach einem der vorhergehenden Ansprüche, wobei der vorinstallierte Softwarestapel eine Web-Benutzerschnittstelle aufweist, die dazu eingerichtet ist, die Kommunikation des Benutzers (100) mit dem CSMS (310) zu ermöglichen.

4. Externer Arbeiterknoten nach einem der vorhergehenden Ansprüche, wobei der vorinstallierte Softwarestapel eine Cloud-Laufzeit (223) umfasst.

5. Externer Arbeiterknoten nach einem der vorhergehenden Ansprüche, wobei der externe Arbeiterknoten (210) dazu eingerichtet ist, Datenverarbeitungsaufgaben mit Arbeiterknoten (420) des öffentlichen Clusters (400) zu teilen.

6. Externer Arbeiterknoten nach einem der vorhergehenden Ansprüche, wobei der externe Arbeiterknoten (210) dazu eingerichtet ist, Datenverarbeitungsanfragen des Benutzers (100) allen anderen Datenverarbeitungsanfragen von dem öffentlichen Cluster vorzuziehen.

7. Externer Arbeiterknoten nach einem der vorhergehenden Ansprüche, wobei der externe Arbeiterknoten dazu eingerichtet ist, eine sichere getunnelte Verbindung (850) mit dem öffentlichen Cluster (400) herzustellen.

8. Hybrides Cloudsystem, das aufweist:
• einen öffentlichen Cluster eines Dienstanbieters, der dazu eingerichtet ist, Datenverarbeitungsaufgaben von Benutzern durchzuführen, wobei der öffentliche Cluster aufweist:
o Arbeiterknoten (420), die dazu eingerichtet sind, die Datenverarbeitungsaufgaben durchzuführen,
o ein Cloud-Service-Management-System (310), das dazu eingerichtet ist, die Arbeiterknoten zu verwalten und dem öffentlichen Cluster (400) neue Arbeiterknoten und/oder externe Arbeiterknoten hinzuzufügen;
• ein Kommunikationsnetzwerk (500), das dazu eingerichtet ist, Kommunikationsverbindungen zwischen den Arbeiterknoten (420) und/oder zwischen den Arbeiterknoten (420) und dem CSMS (310) herzustellen;
• einen externen Arbeiterknoten (210) nach einem der Ansprüche 1 bis 7, wobei der externe Arbeiterknoten über das Kommunikationsnetzwerk (500) Daten mit dem öffentlichen Cluster (400) austauscht.

9. Hybrides Cloudsystem nach Anspruch 8, wobei der externe Arbeiterknoten über einen Heim-Gateway-Router (230) mit dem Kommunikationsnetzwerk (500) verbunden ist.

10. Hybrides Cloudsystem nach einem der Ansprüche 8 bis 9, wobei das hybride Cloudsystem mehrere externe Arbeiterknoten (210) aufweist.

11. Hybrides Cloudsystem nach Anspruch 10, wobei alle der mehreren externen Arbeiterknoten (210) einem einzelnen Benutzer (100) zugeordnet sind.

12. Hybrides Cloudsystem nach einem der Ansprüche 8 bis 11, wobei die Kommunikation zwischen den Knoten (210, 420), dem CSMS (310) und/oder einem Cloud-Service-Portal (300) als Anwendungsprogrammierschnittstellen realisiert sind.

13. Hybrides Cloudsystem nach einem der Ansprüche 8 bis 12, wobei eine Cloudabstraktionsschicht des CSMS (310) Anfragen des Benutzers (100) in diverse öffentliche Cloud-APIs übersetzt.

14. Verfahren zum Einrichten eines hybriden Cloudsystems nach einem der Ansprüche 8 bis 13, umfassend die folgenden Schritte:
• Verbinden eines externen Arbeiterknotens (210) nach einem der Ansprüche 1 bis 7 mit einem Kommunikationsnetzwerk (500), wobei dem Kommunikationsnetzwerk ein öffentlicher Cluster zugeordnet ist;
• Starten eines Registrierungs- und Authentifizierungsprozesses des externen Arbeiterknotens (210) bei dem CSMS (310);
• nach erfolgreicher Registrierung des externen Arbeiterknotens (210), Hinzufügen des externen Arbeiterknotens (210) zu dem öffentlichen Cluster (400) .

## Revendications

1. Noeud de travail externe destiné à être utilisé dans un environnement de réseau domestique par un utilisateur adapté pour accéder à un cluster public sur Internet, le noeud de travail externe (210) comprend :
une interface de communication (214, 215, 216) adaptée pour communiquer avec un réseau de communication (500) via un routeur de passerelle domestique (230) ;
une unité informatique (211, 212, 213) adaptée pour effectuer des tâches de calcul,
une pile logicielle préinstallée, dans lequel la pile de logiciels préinstallés comprend un système d'enregistrement de noeud «NRS» (224) qui est adapté pour coordonner un processus d'enregistrement du noeud de travail externe (210) avec un système de gestion de services de cloud «CSMS» (310) d'un cluster public (400) de fournisseur de réseau.

2. Noeud de travail externe selon la revendication 1, dans lequel la pile logicielle préinstallée comprend une unité de sécurité adaptée pour stocker un code d'identification «ID-code» (222) du noeud de travail externe (210).

3. Noeud de travail externe selon une quelconque des revendications, dans lequel la pile logicielle préinstallée comprend une interface d'utilisateur Web adaptée pour permettre la communication de l'utilisateur (100) avec le CSMS (310).

4. Noeud de travail externe selon une quelconque des revendications, dans lequel la pile logicielle préinstallée comprend un environnement d'exécution de cloud (223).

5. Noeud de travail externe selon une quelconque des revendications, dans lequel le noeud de travail externe (210) est adapté pour partager des tâches de calcul avec des noeuds de travail (420) du cluster public (400) .

6. Noeud de travail externe selon une quelconque des revendications, dans lequel le noeud de travail externe (210) est adapté pour préférer les demandes de calcul de l'utilisateur (100) à toutes les autres demandes de calcul provenant du cluster public.

7. Noeud de travail externe selon une quelconque des revendications, dans lequel le noeud de travail externe est adapté pour établir une liaison tunnelisée sécurisée (850) avec le cluster public (400).

8. Système de cloud hybride comprenant :
• un cluster public d'un fournisseur de services configuré pour effectuer des tâches informatiques d'utilisateurs, le cluster public comprenant
∘ des noeuds de travail (420) adaptés pour effectuer des tâches de travail,
∘ un système de gestion de services cloud (310) adapté pour gérer les noeuds de travail et pour ajouter de nouveaux noeuds de travail et/ou un noeud de travail externe au cluster public (400) ;
• un réseau de communication (500) adapté pour établir des liens de communication entre les noeuds de travails (420) et/ou entre les noeuds de travails (420) et le CSMS (310) ;
• un noeud de travail externe (210) selon une quelconque des revendications 1 à 7, dans lequel le noeud de travail externe échange des données avec le cluster public (400) via le réseau de communication (500).

9. Système de cloud hybride selon la revendication 8, dans lequel le noeud de travail externe est connecté au réseau de communication (500) via un routeur de passerelle domestique (230).

10. Système de cloud hybride selon une des revendications 8-9, dans lequel le système de cloud hybride comprend plusieurs noeuds de travail externes (210).

11. Système de cloud hybride selon une des revendications 10, dans lequel tous les multiples noeuds de travail externes (210) sont associés à un seul utilisateur (100) .

12. Système de cloud hybride selon une des revendications 8-11, dans lequel la communication entre les noeuds (210, 420), le CSMS (310) et/ou un portail de service cloud (300) sont réalisés en tant qu'interfaces de programmation d'applications.

13. Système de cloud hybride selon une des revendications 8-12, dans lequel une couche d'abstraction de cloud du CSMS (310) traduit les demandes de l'utilisateur (100) en plusieurs APIs de cloud public.

14. Procédé d'établissement d'un système de cloud hybride selon une quelconque des revendications 8-13 comprenant les étapes suivantes consistant à :
• connecter un noeud de travail externe (210) selon une des revendications 1 à 7, concernant un réseau de communication (500), dans lequel un cluster public est associé au réseau de communication ;
• démarrer un processus d'enregistrement et d'authentification du noeud de travail externe (210) au niveau du CSMS (310) ;
• après l'enregistrement réussi du noeud de travail externe (210), ajouter le noeud de travail externe (210) au cluster public (400).
